# FASCICULE DE BREVET EUROPEEN

(11) **EP 3 502 895 B1**
(45) Date de publication et mention de la délivrance du brevet: **21.08.2024**
(21) Numéro de dépôt: 18214868.4
(22) Date de dépôt: 20.12.2018
(51) Int. Cl.: G06F 9/50, G06F 11/30, G06F 11/34

(54) **COMMANDE DE LA CONSOMMATION ÉNERGÉTIQUE D'UNE GRAPPE DE SERVEURS**
STEUERUNG DES ENERGIEVERBRAUCHS EINES CLUSTERS VON SERVERS
CONTROLLING THE ENERGY CONSUMPTION OF A SERVER CLUSTER

(30) Priorité: 22.12.2017 FR 1763075
(43) Date de publication de la demande: 26.06.2019
(73) Titulaire: Bull SAS, 78340 Les Clayes-sous-Bois (FR)
(72) Inventeur: STOFFEL, Mathieu, 38000 Grenoble (FR); MAZOUZ, Abdelhafid, 92310 Sèvres (FR)
(74) Mandataire: Cabinet Camus Lebkiri

(56) Documents cités:
- EP-A1- 2 535 855
- FR-A1- 2 980 007
- FR-A1- 3 010 552
- FR-A1- 3 031 200
- US-A1- 2011 271 283

## Description

L'invention concerne la commande d'une grappe de serveurs, en particulier mais non exclusivement d'une grappe de serveurs appartenant à la catégorie des supercalculateurs.

L'invention est exposée dans le jeu de revendications joint.

Un supercalculateur est un ordinateur conçu pour atteindre les plus hautes performances possibles avec les techniques connues au jour de sa conception, en particulier en ce qui concerne la rapidité de traitement des données, c'est-à-dire la vitesse de calcul. On l'appelle aussi calculateur à haute performance. Il est classiquement dédié à l'exécution d'applications de calcul à haute performance. Il trouve par exemple des utilisations dans le domaine du calcul scientifique. Afin d'augmenter les performances atteignables par le supercalculateur, celui-ci prend souvent la forme d'une grappe de serveurs comprenant plusieurs noeuds, chacun de ces noeuds comportant plusieurs coeurs de calcul.

L'application exécutée par le supercalculateur traverse en général plusieurs phases distinctes. Il existe par exemple des phases de calcul intense et des phases avec une forte densité d'accès mémoire. Selon la phase en cours, les coeurs de calcul sont mis à contribution de manière différente. Une mauvaise optimisation de l'utilisation des coeurs en fonction pour une phase en cours donnée peut conduire à un ralentissement du calcul, autrement dit à une dégradation des performances du supercalculateur, ou bien à une consommation excessive d'énergie.

Le document FR 3 031 200 A1 (BULL SAS) concerne un procédé de gestion automatique de la consommation électrique d'une grappe de serveurs au moyen de la mesure de la consommation instantanée de la grappe et de l'acquisition d'une limite instantanée de cette consommation.

Le document EP 2 535 855 A1 (ACCENTURE GLOBAL SERVICES LIMITED) concerne la surveillance de ressources distribuées.

Un but de l'invention est d'optimiser la consommation énergétique d'une telle grappe de serveurs sans détériorer ses performances dans l'exécution de l'application.

A cet effet, on prévoit selon l'invention un procédé de commande d'une grappe de serveurs, la grappe comprenant plusieurs noeuds, dans lequel :
- des agents automatisés mesurent l'évolution d'au moins une métrique quantifiant l'utilisation des noeuds pour l'exécution d'une application,
- les agents déterminent pour chaque noeud si un changement de phase a eu lieu dans l'application exécutée au moyen de la mesure de la métrique et le cas échéant commandent un changement de fonctionnement du noeud,
- un coordinateur automatisé agrège, à intervalles réguliers, les mesures de métrique et les changements de fonctionnement des noeuds qui ont eu lieu, et
- en fonction des mesures agrégées, le coordinateur envoie des instructions à au moins un des agents.

Ainsi, grâce aux agents automatisés et à la mesure de la métrique choisie, il est possible de détecter les changements de phase de l'application exécutée par la grappe de serveurs. De par cette détection, les agents peuvent déclencher des actions impactant les noeuds, plus particulièrement leurs coeurs de calcul, de manière cohérente avec la phase traversée. Le coordinateur, regroupant les mesures de métrique et les changements de fonctionnement effectués par les agents, permet de déterminer l'évolution, globale et à l'échelle du noeud, de performances et de consommation énergétique de la grappe de serveurs. Ces informations sont ensuite transformées en instructions à destination des agents pour affiner les décisions prises sur les noeuds. En d'autres termes, le coordinateur rétroagit sur les agents pour optimiser leurs prises de décision sur les noeuds et améliorer l'efficience de la grappe de serveurs.

Avantageusement, chacun des agents est attribué à un noeud de manière bijective.

Ainsi, chaque noeud est commandé par un agent qui lui est propre.

Avantageusement, avant de déterminer si un changement de phase a eu lieu, chaque agent compare la valeur de la métrique mesurée à une ou plusieurs valeurs de seuil prédéterminées.

Le changement de phase de l'application est ainsi détecté par des opérations de comparaison simples, rapides et nécessitant peu de ressources.

De préférence, on modifie dynamiquement les valeurs de seuil prédéterminées en fonction de l'impact d'un changement de fonctionnement du noeud commandé par les agents.

Ce degré de liberté sur les valeurs de seuil permet au procédé de s'adapter en temps réel pour affiner davantage encore les décisions prises.

Avantageusement, la métrique est choisie parmi la liste constituée de la consommation énergétique instantanée des noeuds, le nombre d'instructions par cycle de processeur exécutées par des coeurs de calcul des noeuds, la quantité de lectures et/ou d'écritures dans des systèmes de fichiers effectuées par les noeuds, et le nombre d'octets envoyés et/ou reçus sur un réseau par les noeuds.

Ces métriques sont pertinentes pour discriminer les types de phases que peut traverser l'application.

Avantageusement, le changement de fonctionnement est choisi parmi la liste constituée de la modification du point de fonctionnement (fréquence ; tension électrique) des coeurs de calcul, la désactivation de coeurs de calcul des noeuds sans charge de travail, et la modification de l'attribution des tâches aux coeurs de calcul.

Le point de fonctionnement (fréquence ; tension électrique) est communément désigné par l'expression anglo-saxonne « P-state ». Ces changements permettent d'adapter efficacement les paramètres de fonctionnement des composants de la grappe de serveurs à la phase traversée par l'application exécutée pour optimiser la consommation énergétique engendrée par l'application.

Avantageusement, la commande du changement de fonctionnement des noeuds par les agents prend en compte des modèles de prédiction, prédéterminés, d'une performance des noeuds et/ou d'une énergie consommée par les noeuds.

La prise en compte de ces modèles de prédiction permet d'anticiper les résultats que les changements de fonctionnement des noeuds peuvent avoir. Les agents sont ainsi en mesure de prendre des décisions fondées et donc plus pertinentes.

Avantageusement, le coordinateur agrège toutes les dix à trente secondes les mesures de métrique et les changements de fonctionnement des noeuds, de préférence toutes les quinze secondes.

Cette fréquence est suffisamment élevée pour avoir un suivi régulier des agents et suffisamment basse pour ne pas engendrer un excès de communication entre le coordinateur et les agents, ce qui augmenterait les ressources nécessaires à la mise en oeuvre du procédé.

Avantageusement, les données envoyées par les agents au coordinateur comprennent une liste des séquences de phases rencontrées par les noeuds, des statistiques sur les mesures de valeurs de la métrique, des informations sur une performance des noeuds, et/ou des informations sur une consommation énergétique des noeuds.

Le coordinateur peut ainsi effectuer une évaluation complète et précise des résultats en termes de performance et de consommation énergétique de la grappe de serveurs.

De préférence, le coordinateur interroge les agents tour à tour, par exemple selon le modèle « round-robin unicast ».

Cela permet de ne pas perturber les communications inter-noeuds associées à l'exécution de l'application, ce qui nuirait aux performances de la grappe de serveurs.

Avantageusement, le coordinateur détermine, en fonction des mesures agrégées, si la consommation d'énergie globale de la grappe de serveurs a augmenté ou baissé, et si la consommation d'énergie de chacun des noeuds a augmenté ou baissé.

Le coordinateur peut ainsi déterminer si les agents ont été efficaces et demander aux agents qui sont la source de mauvaises décisions de donner des instructions différentes aux noeuds qui leur sont attribués.

Avantageusement, le procédé est mis en oeuvre dans le cadre d'un calcul haute performance.

Le calcul haute performance étant un type d'application consommant une grande quantité d'énergie, l'optimisation de cette consommation est d'autant plus importante.

On prévoit aussi selon l'invention un programme d'ordinateur, comprenant des instructions de code aptes à commander la mise en oeuvre des étapes d'un procédé tel que défini plus haut lorsqu'il est exécuté sur un ordinateur.

On prévoit de plus selon l'invention un procédé de mise à disposition du programme ci-dessus en vue de son téléchargement sur un réseau de télécommunications.

On prévoit également selon l'invention un dispositif de commande d'une grappe de serveurs, apte à :
- mesurer l'évolution d'au moins une métrique quantifiant l'utilisation de noeuds de la grappe de serveurs pour l'exécution d'une application,
- déterminer pour chaque noeud si un changement de phase a eu lieu dans l'application exécutée au moyen de la mesure de la métrique et le cas échéant commander un changement de fonctionnement du noeud,
- agréger, à intervalles réguliers, les mesures de métrique et les changements de fonctionnement des noeuds, et
- en fonction des mesures agrégées, envoyer des instructions de changement de fonctionnement aux noeuds.

On prévoit par ailleurs selon l'invention un système comprenant un dispositif de commande tel que décrit ci-dessus et une grappe de serveurs.

On va maintenant présenter un mode de réalisation de l'invention donné à titre d'exemple non limitatif et à l'appui des figures annexées sur lesquelles :
- la figure 1 est un schéma illustrant un système informatique selon l'invention, et
- la figure 2 est un schéma représentant les éléments constitutifs d'un dispositif de commande automatisé, selon l'invention, du système informatique de la figure 1.

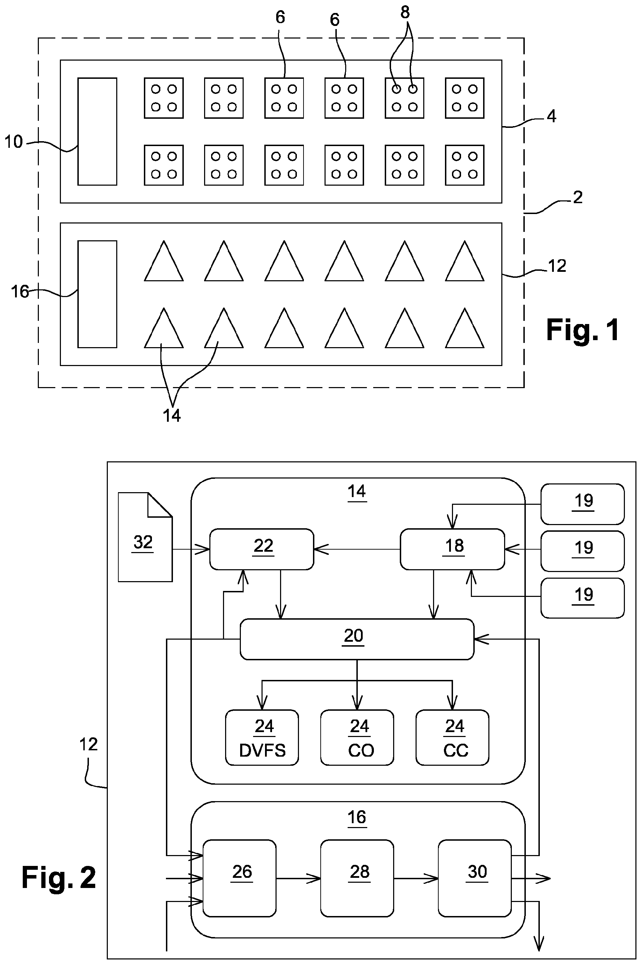

On a représenté en figure 1 un système informatique 2 selon l'invention. Il comprend une grappe de serveurs 4 destinée à exécuter une application. Il peut par exemple s'agir d'une application comprenant du calcul à haute performance, auquel cas la grappe de serveurs 4 est un supercalculateur. On peut toutefois prévoir qu'il s'agisse d'un tout autre type d'application.

La grappe de serveurs 4 comprend plusieurs noeuds 6 connectés entre eux. Chacun de ces noeuds comporte plusieurs coeurs de calcul 8, chacun de ces coeurs de calcul 8 étant en charge d'exécuter une partie de l'application. La grappe de serveur 4 comprend par ailleurs un noeud administrateur 10 organisant la répartition de l'exécution de l'application par les noeuds 6.

Le système 2 comprend également un dispositif automatisé de commande 12 connecté à la grappe de serveurs 6 et apte à la commander. Le dispositif 12 comprend deux types de composants : des agents 14 et un coordinateur 16. Les agents 14 et le coordinateur 16 comprennent des programmes informatiques qui sont exécutés respectivement par les noeuds 6 et le noeud administrateur 10. On dit aussi que les agents 14 et le coordinateur 16 s'exécutent respectivement sur les noeuds 6 et le noeud administrateur 10. Une autre formulation possible est que les noeuds 6 et le noeud administrateur 10 sont les supports d'exécution respectifs des agents 14 et du coordinateur 16. Ici, le nombre d'agents 14 est égal au nombre de noeuds 6 de la grappe de serveurs 4, chacun des agents 14 étant attribué à un noeud 6 de manière bijective.

Les agents 14 mesurent l'évolution de métriques qui forment des grandeurs caractéristiques de l'état des noeuds 6. À partir de ces mesures, les agents 14 décident et mettent en oeuvre des actions visant à réduire la consommation énergétique des noeuds 6 tout en préservant les performances de l'application exécutée.

À intervalles réguliers, une consolidation des données de fonctionnement des agents 14 est effectuée par le coordinateur 16. Cela est fait afin d'analyser l'impact des décisions prises localement par les agents 14 sur les performances et la consommation énergétique des noeuds 6 impliqués dans un calcul donné. La consolidation a pour but d'offrir une vision globale des performances et de la consommation énergétique de la grappe de serveurs 4. Grâce à ces données consolidées, il est possible d'affiner les décisions prises au niveau de chaque agent 14 localement, et ainsi d'assurer un avancement global homogène pour respecter les contraintes temporelles et atteindre une consommation énergétique minimale.

Ainsi, le dispositif 12 permet la mise en oeuvre d'un procédé de commande de la grappe de serveurs 4 dans lequel :
- les agents 14 mesurent l'évolution d'au moins une métrique quantifiant l'utilisation des noeuds 6 pour l'exécution de l'application,
- les agents 14 déterminent pour chaque noeud 6 si un changement de phase a eu lieu dans l'application exécutée au moyen de la mesure de la métrique et le cas échéant commandent un changement de fonctionnement du noeud 6,
- le coordinateur 16 agrège, à intervalles réguliers, les mesures de métrique et les changements de fonctionnement des noeuds 6 qui ont eu lieu, et
- en fonction des mesures agrégées, le coordinateur 16 envoie des instructions à au moins un des agents 14.

On va maintenant décrire plus en détails le dispositif 12, en commençant par ses agents 14, à l'appui de la figure 2. Dans ce qui suit, on ne mentionnera qu'un seul des agents 14 et le noeud 6 qui lui est attribué, en sachant que les autres agents 14 et les autres noeuds 6 sont similaires.

L'agent 14 comporte un sous-module de mesure 18 apte à mesurer des métriques ou grandeurs caractéristiques de l'utilisation de la grappe de serveur 4 à intervalles réguliers. Le nombre d'instructions par cycle de processeur exécutées par les coeurs de calcul 8 et leur consommation énergétique instantanée sont deux exemples de métriques. L'agent 14 est également apte à collecter des métriques de haut niveau du système d'exploitation telles que la quantité de lectures et/ou écritures dans des systèmes de fichiers parallèles ou le nombre d'octets envoyés et/ou reçus sur un réseau. Ces mesures permettent de suivre l'évolution des métriques au fil de l'exécution de l'application, par soustraction entre deux relevés consécutifs.

Pour accéder en lecture à des compteurs de performance 19, le dispositif 12 utilise préférentiellement la bibliothèque C libpfm pour les compteurs matériels de performance et les métriques exposées par le système d'exploitation. Néanmoins, d'autres options sont à disposition. Un premier exemple est la bibliothèque C PAPI, qui est une bibliothèque de haut niveau de collecte des compteurs de performance. Elle permet d'accéder à plusieurs composants, incluant le système d'exploitation. Elle fait appel à la bibliothèque C libpfm pour accéder aux compteurs matériels de performance. Un second exemple est constitué par les registres « MSR » d'un processeur de la grappe de serveurs 4 qui permettent de mesurer certaines grandeurs caractéristiques mais dont le choix est restreint aux compteurs matériels de performance pour processeur. Ces bibliothèques et ces registres sont bien connus de l'homme du métier, c'est pourquoi nous ne les décrirons pas davantage.

Le relevé de la puissance consommée par le noeud de calcul est réalisé à l'aide d'un circuit intégré propre à une fonctionnalité, plus communément désigné par le sigle ASIC désignant les termes anglo-saxons « application-specific integrated circuit », et d'un réseau de portes programmables in situ, plus communément désigné par l'acronyme FPGA désignant les termes anglo-saxons « field-programmable gate array », par exemple implanté sur une lame accueillant les noeuds 6. Un exemple de ASIC/FPGA est HDEEM. Ces éléments permettent d'échantillonner physiquement à l'aide de sondes matérielles la consommation énergétique des différents éléments du noeud 6 à une fréquence avoisinant le kilohertz. Cela permet d'avoir accès à la consommation énergétique globale du noeud 6, mais aussi de ses différents constituants tels que les sockets de processeurs, la mémoire RAM ou le réseau d'interconnexion de processeurs. En variante, une interface RAPL, acronyme désignant les termes anglo-saxons « running average power limit », permet d'accéder à la consommation énergétique du processeur, notamment des coeurs de calcul, et de la mémoire RAM connectée à son bus mémoire. Néanmoins, les relevés de la puissance consommée offrent moins de granularité et la manière dont la consommation énergétique est obtenue n'est pas connue avec certitude. Selon une autre variante, un wattmètre en ligne pourrait être utilisé, mais cela nécessiterait d'instrumenter chaque noeud 6 de manière physique. Ce n'est donc pas viable si le nombre de noeuds 6 est trop important.

L'agent 14 comporte un sous-module de prise de décision 20 qui a pour but de déterminer, à partir des relevés des métriques faites par le sous-module de mesure 18, s'il y a eu un changement de phase de l'application et si une action devrait être prise en conséquence. Les décisions sont implémentées sous forme d'arbres binaires de décision paramétrés. Par exemple, une valeur de seuil prédéterminée sur le nombre d'instructions exécutées par cycle du processeur est définie. Si la valeur mesurée est supérieure à la valeur de seuil, la phase traversée par l'application est une phase de calcul intensive. Une action peut alors être déclenchée, par exemple modifier la fréquence des coeurs de calcul 8.

L'agent 14 comprend un sous-module d'auto-réglage 22. En reprenant l'exemple ci-dessus, la valeur de seuil et la fréquence à fixer sont deux paramètres qui sont dynamiquement modifiés par le sous-module d'auto-réglage 22 pour chercher la meilleure optimisation possible.

Le sous-module d'auto-réglage 22 a besoin de pouvoir évaluer les performances de la grappe de serveurs 4. En effet, l'objectif du dispositif 12 est de maximiser l'efficacité énergétique, c'est-à-dire de maximiser la performance de la grappe de serveurs 4 et de minimiser l'énergie consommée par le système 2. Le but du sous-module d'auto-réglage 22 est d'évaluer l'impact d'une décision sur les performances de la grappe de serveurs 4, et d'adapter les paramètres de l'arbre de décision associé à ladite décision pour ne pas dégrader les performances. L'adaptation des paramètres, qui peut aller jusqu'à la désactivation d'un arbre de décision, peut par exemple suivre un algorithme de parcours linéaire des valeurs possibles, ou encore un algorithme de recherche dichotomique.

Le sous-module d'auto-réglage 22 peut aussi implémenter des politiques proactives en se basant sur des modèles de prédiction de la performance ou de l'énergie consommée des futures phases. Le but est d'améliorer grandement l'efficacité du sous-module de prise de décisions 20 de l'agent 14. Ces modèles peuvent dépendre ou non du matériel sous-jacent et de l'environnement d'exécution. De tels modèles prennent en entrée un ensemble de métriques comme le nombre d'instructions exécutées par cycle du processeur, l'intensité des accès mémoire, le nombre d'entrées/sorties ou encore la fréquence de fonctionnement des coeurs de calcul 8. À partir de ces mesures, ils estiment la performance attendue et l'énergie consommée pour plusieurs configurations de la grappe de serveurs 4. Il sera alors possible d'évaluer l'impact d'une décision en termes de performances et d'énergie consommée avant de l'appliquer, ce qui évitera la prise de décisions qui dégraderaient les performances ou augmenteraient la consommation énergétique.

Afin d'évaluer les performances de l'application, une hypothèse, vérifiée pour la quasi-totalité des applications, est faite. On considère en effet que les applications de calcul à haute performance sont constituées d'un noyau de calcul principal qui est exécuté un grand nombre de fois consécutivement pour traiter un jeu de données d'entrées et produire un résultat. Au lancement de l'application, le dispositif 12 mesure le nombre d'instructions exécutées, ou toute autre métrique pertinente de performance, sur une période de temps longue devant la durée d'une phase, et faible devant la durée d'exécution de l'application. En ordre de grandeur, la durée d'une phase est au plus de l'ordre de la dizaine de millisecondes, et la durée d'exécution d'une application est au moins de plusieurs heures. Ainsi, le dispositif 12 va par exemple mesurer le nombre d'instructions exécutées pendant une dizaine de secondes, sans prendre de décision, dans des conditions nominales d'exécution et ce plusieurs fois consécutivement. Le sous-module d'auto-réglage 22 aura ainsi une référence en termes de performances, à savoir le nombre d'instructions exécutées sur une période d'une dizaine de secondes, et d'énergie consommée sur la même période. La phase initiale d'étalonnage du sous module d'auto-réglage 22 sera poursuivie tant que les relevés ne convergent pas. De même, la configuration initiale du sous-module d'auto-réglage 22 permettra de modifier les paramètres de la phase d'étalonnage, tels que la durée de la période d'étalonnage.

D'autres solutions sont envisageables pour mesurer les performances de l'application et ainsi permettre au sous-module d'auto-réglage 22 d'adapter le sous-module de prise de décisions 20.

Une première variante est de déterminer la séquence de phases caractéristique de la boucle principale pour pouvoir mesurer le temps d'exécution associé et ainsi évaluer l'impact des décisions qui seront prises. Pour identifier ladite séquence de phase, un algorithme de recherche de séquence périodique dans une suite peut être appliqué.

Une seconde variante consiste à identifier la boucle principale lors de la compilation de l'application, et à l'annoter de sorte à ce que le dispositif 12 soit notifié du début et de la fin de chaque itération. Cette fonctionnalité serait implémentée par le biais d'un module du compilateur. Chaque itération étant délimitée, il serait possible pour le sous-module d'auto-réglage 22 de mesurer le temps d'exécution moyen d'une itération et d'évaluer l'impact des décisions prises par le dispositif 12 sur les performances.

Selon une troisième variante, on capture dynamiquement les points d'entrée et de sortie associés aux constructeurs de supports exécutifs tels qu'OpenMP ou MPI connus de l'homme du métier. Cela peut être mis en place grâce à une fonctionnalité de surcharge des opérateurs au lancement des applications, par le biais de la variable d'environnement LD_PRELOAD dans les systèmes GNU/Linux. À chaque fois qu'un opérateur surchargé est capturé, une routine d'instrumentation est exécutée. Cette dernière aura pour rôle de notifier le dispositif 12 d'un événement, puis d'appeler la version originale de l'opérateur surchargé. Une telle méthode apporterait beaucoup de flexibilité et ne serait pas liée à une version particulière ou à une implémentation spécifique d'un support exécutif tel qu'OpenMP ou MPI.

L'agent 14 comprend un sous-module actionneur 24 qui a pour but d'implémenter les mécanismes sous-jacents à une action que peut prendre le dispositif 12. En ce sens, de nouveaux actionneurs peuvent être développés en réponse à l'enrichissement du sous-module de prise de décisions, par exemple suite à la sortie d'une nouvelle technologie de processeur ou de mémoire RAM. En conséquence, il est presque impossible de pouvoir décrire l'ensemble des actionneurs susceptibles d'être intégrés au dispositif 12. Trois actionneurs sont néanmoins incontournables.

Le premier est l'actionneur « Dynamic Voltage Frequency Scaling » (DVFS) que l'on peut traduire en français par « mise à l'échelle dynamique de la fréquence et de la tension ». Le but des techniques DVFS est de réduire la fréquence et la tension électrique de fonctionnement d'un composant pour réduire sa consommation énergétique. Ainsi, lors des phases pendant lesquelles les coeurs de calcul 8 peuvent ne pas fonctionner à pleine vitesse sans pénaliser les performances, il est possible de réduire leurs fréquences de fonctionnement pour économiser de l'énergie. L'actionneur DVFS du dispositif 12 utilise des écritures directes dans des registres « MSR » du processeur pour moduler le couple (fréquence, tension) des coeurs de calcul 8. Il serait par ailleurs aussi possible de recourir à des écritures dans les fichiers virtuels mis à disposition par le noyau Linux, sous le chemin /sys/devices/system/cpu.

Le deuxième est l'actionneur « core offliner » (CO) traduisible en français par « désactivation des coeurs de calcul ». Le but de cet actionneur est de désactiver des coeurs de calcul 8 lorsque ces derniers n'ont pas de charge de travail, par exemple lors des sauvegardes intermédiaires d'une application qui peuvent se traduire par des phases d'écriture sur disque mutualisées pendant lesquelles seule une partie des coeurs de calcul 8 exécute des instructions. De la même manière que pour l'actionneur DVFS, la désactivation d'un coeur de calcul 8 pourra être faite par le biais de fichiers virtuels sous le chemin /sys/devices/system/cpu.

Le troisième est l'actionneur « core consolidator » (CC) traduisible en français par « répartition des coeurs de calcul ». Le but de cet actionneur est de modifier l'affinité des processus d'une application lorsque que ces derniers n'exploitent pas au mieux les coeurs de calcul 8 auxquels ils sont affectés. On peut par exemple prendre le cas d'une application composée de quatre processus, dont deux s'exécutent sur un premier coeur de calcul avec un taux d'utilisation du coeur de 100%, un s'exécute sur un second coeur en engendrant 50% d'utilisation, et le dernier s'exécute sur un troisième coeur en engendrant également 50% d'utilisation. Dans ce cas, le rôle de l'actionneur « core consolidator » sera d'affecter les deux processus s'exécutant sur les deuxième et troisième coeurs de calcul vers un même et unique coeur de calcul. Ainsi, le coeur de calcul libéré pourra être désactivé grâce à l'actionneur « core offliner » cité précédemment, ce qui engendrera une diminution de l'énergie consommée sans impacter les performances de la grappe de serveurs. La manipulation de l'affinité des processus pourra être implémentée en utilisant la fonction sched_setaffinity du module sched.h en langage C.

Le coordinateur 16 comprend un sous-module d'agrégation 26 destiné à agréger les données en provenance des agents 14. À intervalles réguliers, typiquement toutes les dix à trente secondes, par exemple toutes les quinze secondes, le sous-module d'agrégation 26 demande aux agents 14 de lui envoyer des informations relatives à leur fonctionnement. Ces informations comprennent la séquence des phases rencontrées, des statistiques sur les mesures de métriques telles que les valeurs minimales et maximales observées, la valeur moyenne ou encore les quartiles, des données d'évaluation des performances des noeuds 6 comme par exemple le facteur d'accélération/ralentissement des performances, et la consommation énergétique des noeuds 6 notamment.

Les communications entre les agents 14 et le coordinateur 16 se font selon un modèle de communication « round-robin unicast » utilisant le protocole TCP pour la couche transmission. En d'autres termes, le sous-module d'agrégation 26 interroge chaque agent 14 tour à tour. De plus, les communications seront faites « out-of-band » ou hors bande, c'est-à-dire en utilisant un réseau Ethernet de management de la grappe de serveurs 4. Cela permet de ne pas perturber les communications inter-noeuds associées à l'exécution de l'application, même si le volume des données échangées est réduit. Ce volume est en général de l'ordre du kilooctet par agent 14 et par envoi. Ainsi, dans l'hypothèse où le passage à l'échelle de communications hors bande entre les agents 14 et le coordinateur 16 n'est pas vérifié, il est possible d'utiliser le réseau d'interconnexion rapide inter-noeuds sans perturber significativement les performances de l'application exécutée.

Le coordinateur 16 comprend un sous-module d'évaluation 28 destiné à vérifier que les performances à l'échelle de la grappe de serveurs ne sont pas perturbées par les actions des agents 14 sur les noeuds 6 et à évaluer la réduction d'énergie consommée par la grappe de serveurs 4. Pour cela, il s'appuie sur les relevés agrégés de performance et de consommation énergétique en provenance des agents 14. Il peut déterminer quels noeuds 6 sont responsables d'une dégradation de performance et/ou d'une hausse d'énergie consommée, ou bien encore quelle est la meilleure optimisation d'énergie consommée atteinte par les agents 14, et transmettre cette information à un sous-module moteur de décision du coordinateur 16 qui sera décrit plus bas.

Le sous-module d'évaluation 28 peut analyser les séquences horodatées de détection de phases dans le but d'identifier des déséquilibres de charge de travail. En effet, si les phases de calcul sont en moyenne plus courtes sur un noeud 6 que sur un autre, alors que les fréquences de fonctionnement de leurs coeurs de calcul 8 sont identiques, cela peut indiquer que la quantité de travail à accomplir par le premier noeud est inférieure à celle du second noeud.

Le coordinateur 16 comprend un sous-module moteur de décision 30 qui présente deux rôles principaux.

Premièrement, il convertit le diagnostic effectué par le sous-module d'évaluation 28 en instructions à transmettre aux agents 14. Par exemple, si le sous-module d'évaluation 28 a déterminé qu'un agent 14 semble se satisfaire d'une réduction sous-optimale de la consommation énergétique, le sous-module moteur de décision 30 communique à l'agent 14 en question qu'une meilleure optimisation est possible. L'agent 14 reprendra alors la procédure d'auto-réglage, décrit plus haut, avec des paramètres plus agressifs pour atteindre une meilleure réduction de la consommation énergétique. La transmission de données se fait de la même manière que pour le transfert des données des agents 14 vers le sous-module d'agrégation, à savoir tour à tour selon un modèle « round-robin unicast », en utilisant le protocole TCP.

Deuxièmement, il forme un garde-fou. Si les performances à l'échelle globale de la grappe de serveurs sont dégradées, il bridera les sous-module de prise de décision 20 des agents 14 attribués aux noeuds 6 présentant des bilans, en termes de performance et/ou de consommation énergétique, les plus défavorables pour qu'ils prennent des décisions plus conservatives. Par exemple, il peut ordonner la désactivation d'un arbre de décision ou limiter la baisse de fréquence des coeurs de calcul 8 autorisée. De plus, si les performances de la grappe de serveurs 4 sont dégradées et que les ajustements tentés n'ont pas été efficaces, il peut réinitialiser le dispositif 12 dans son ensemble. Après une succession d'échecs, traduisant l'incapacité du dispositif 12 à optimiser la consommation énergétique de l'application exécutée, il pourra même suspendre l'action du dispositif 12 dans son ensemble.

Les mécanismes internes du sous-module moteur de décision 30 sont implémentés à l'aide d'arbres binaires de décision.

Après l'installation du dispositif 12, une phase de calibrage initiale permet d'adapter les valeurs par défaut des modules de prise de décision des agents 14. En effet, les caractéristiques de composants matériels de technologies différentes peuvent fortement varier. En conséquence, le nombre maximal d'instructions exécutées par cycle du processeur en cas de saturation des bitoducs, plus communément désignés par le terme anglo-saxon « pipelines », des coeurs de calcul 8 va différer significativement. Il faudra donc par exemple adapter les seuils relatifs au nombre d'instructions exécutées par cycle du processeur.

Pour ce faire, un ensemble de tests de calibrage sont exécutés à l'installation du dispositif 12. Par exemple, toujours pour le nombre d'instructions exécutées par cycle du processeur, des tests imposant une charge de travail et une quantité d'accès mémoire graduelles vont permettre de déterminer la valeur maximale associée à cette caractéristique, et la manière dont elle évolue lorsque le trafic vers la mémoire RAM est important. À partir de ces observations, le seuil délimitant par exemple une phase de calcul intense d'une phase d'accès mémoire peut être ajusté.

Comme expliqué plus haut, lors de l'exécution de l'application, les paramètres des sous-modules de prise de décision 20 des agents 14 sont progressivement raffinés par le biais de leurs sous-modules d'auto-réglage 22. Si l'on considère que les ajustements propres à l'architecture matérielle sont associés au calibrage initial, alors ces raffinements sont associables à l'application exécutée, ainsi qu'à son jeu de données initial. Une fois l'exécution de l'application finie, le dispositif sauvegarde son état final dans un fichier de configuration 32, notamment les paramètres des sous-modules de prise de décision des agents 14. De la sorte, l'utilisateur peut utiliser le fichier de configuration 32 pour initialiser le dispositif 12. Ainsi, si la même application doit être exécutée à nouveau sur la même grappe de serveurs 4 et avec un jeu de données similaire à celui utilisé lors de l'exécution qui a permis de produire le fichier de configuration 32 du dispositif 12, ce dernier pourra s'initialiser avec un état quasi-final et ainsi grandement accélérer le processus de recherche de la meilleure optimisation énergétique possible.

## Revendications

1. Procédé de commande d'une grappe de serveurs (4), la grappe (4) comprenant plusieurs noeuds (6) , chaque noeud (6) comprenant plusieurs coeurs de calcul (8), **caractérisé en ce que** :
- des agents automatisés (14) mesurent l'évolution d'au moins une métrique quantifiant l'utilisation des noeuds (6) pour l'exécution d'une application, ladite application étant apte à présenter plusieurs phases, chaque phase étant liée à un niveau d'utilisation de chaque coeur de calcul (8) sur lequel l'application est exécutée,
- les agents (14) déterminent pour chaque noeud (6) si un changement de phase a eu lieu dans l'application exécutée au moyen de la mesure de la métrique et le cas échéant commandent un changement de fonctionnement du noeud (6), le changement de fonctionnement étant choisi parmi la liste constituée de :
- la modification du point de fonctionnement des coeurs de calcul (8) dudit noeud (6) ;
- la désactivation des coeurs de calcul dudit noeud (6) lorsque celui-ci est sans charge de travail ; et
- la modification de l'attribution des tâches aux coeurs de calcul (8) dudit noeud (6),
- un coordinateur automatisé (16) agrège, à intervalles réguliers, les mesures de métrique et les changements de fonctionnement des noeuds (6) qui ont eu lieu et détermine une évolution de la consommation énergétique de la grappe de serveurs (4) et une évolution de la consommation énergétique de chacun des noeuds (6), et
- en fonction des mesures agrégées et de l'évolution de la consommation énergétique de la grappe de serveurs (4) et de l'évolution de la consommation énergétique de chacun des noeuds (6), le coordinateur (16) envoie des instructions à au moins un des agents (14) pour affiner les décisions prises par ledit agent sur un noeud.

2. Procédé selon la revendication précédente, dans lequel, avant de déterminer si un changement de phase a eu lieu, chaque agent (14) compare la valeur de la métrique mesurée à une ou plusieurs valeurs de seuil prédéterminées.

3. Procédé selon la revendication précédente, dans lequel on modifie dynamiquement les valeurs de seuil prédéterminées en fonction de l'impact d'un changement de fonctionnement des noeuds (6) commandés par les agents (14).

4. Procédé selon l'une quelconque des revendications précédentes, dans lequel la métrique est choisie parmi la liste constituée de la consommation énergétique instantanée des noeuds, le nombre d'instructions par cycle de processeur exécutées par des coeurs de calcul (8) des noeuds, la quantité de lectures et/ou d'écritures dans des systèmes de fichiers effectuées par les noeuds, et le nombre d'octets envoyés et/ou reçus sur un réseau par les noeuds.

5. Procédé selon l'une quelconque des revendications précédentes, dans lequel la commande du changement de fonctionnement des noeuds (6) par les agents (14) prend en compte au moins un modèle de prédiction, prédéterminé, d'une performance des noeuds ou d'une énergie consommée par les noeuds.

6. Procédé selon l'une quelconque des revendications précédentes, dans lequel le coordinateur (16) agrège toutes les dix à trente secondes les mesures de métrique et les changements de fonctionnement des noeuds (6), de préférence toutes les quinze secondes.

7. Procédé selon l'une quelconque des revendications précédentes, dans lequel les données envoyées par les agents (14) au coordinateur (16) comprennent au moins une liste des séquences de phases rencontrées par les noeuds, des statistiques sur les mesures de valeurs de la métrique, des informations sur une performance des noeuds, ou des informations sur une consommation énergétique des noeuds.

8. Procédé selon la revendication précédente, dans lequel le coordinateur (16) interroge les agents (14) tour à tour, par exemple selon le modèle « round-robin unicast ».

9. Procédé selon l'une quelconque des revendications précédentes, dans lequel le coordinateur (16) détermine, en fonction des mesures agrégées, si la consommation d'énergie globale de la grappe de serveurs (4) a augmenté ou baissé, et si la consommation d'énergie de chacun des noeuds (6) a augmenté ou baissé.

10. Procédé selon l'une quelconque des revendications précédentes, mis en oeuvre dans le cadre d'un calcul haute performance.

11. Programme d'ordinateur, comprenant des instructions de code qui, lorsque le programme est exécuté par un ordinateur, conduisent celui-ci à mettre en oeuvre les étapes du procédé selon l'une quelconque des revendications précédentes.

12. Procédé de mise à disposition du programme de la revendication précédente en vue de son téléchargement sur un réseau de télécommunications.

13. Dispositif de commande (12) d'une grappe de serveurs (4) comprenant plusieurs noeuds (6), chaque noeud (6) comprenant plusieurs coeurs de calcul (8), **caractérisé en ce qu'**il est apte à :
- mesurer l'évolution d'au moins une métrique quantifiant l'utilisation de noeuds (6) de la grappe de serveurs (4) pour l'exécution d'une application, ladite application étant apte à présenter plusieurs phases, chaque phase étant liée à un niveau d'utilisation de chaque coeur de calcul (8) sur lequel l'application est exécutée,
- déterminer pour chaque noeud (6) au moyen de la mesure de la métrique si un changement de phase a eu lieu dans l'application exécutée et le cas échéant commander un changement de fonctionnement du noeud (6), le changement de fonctionnement étant choisi parmi la liste constituée de :
- la modification du point de fonctionnement des coeurs de calcul (8) dudit noeud (6) ;
- la désactivation des coeurs de calcul dudit noeud (6) lorsque celui-ci est sans charge de travail ; et
- la modification de l'attribution des tâches aux coeurs de calcul (8) dudit noeud (6),
- agréger, à intervalles réguliers, les mesures de métrique et les changements de fonctionnement des noeuds (6) et déterminer une évolution de la consommation énergétique de la grappe de serveurs (4) et une évolution de la consommation énergétique de chacun des noeuds (6), et
- en fonction des mesures agrégées et de l'évolution de la consommation énergétique de la grappe de serveurs (4) et de l'évolution de la consommation énergétique de chacun des noeuds (6), envoyer des instructions de changement de fonctionnement aux noeuds (6) pour affiner les décisions prises par ledit agent sur un noeud (6).

14. Système comprenant un dispositif de commande (12) selon la revendication précédente et une grappe de serveurs (4).

## Patentansprüche

1. Verfahren zum Steuern eines Server-Clusters (4), der Cluster (4) umfassend mehrere Knoten (6), jeder Knoten (6) umfassend mehrere Rechenkerne (8), **dadurch gekennzeichnet, dass:**
- automatisierte Agenten (14) die Entwicklung mindestens einer Metrik messen, die die Nutzung der Knoten (6) für die Ausführung einer Anwendung quantifiziert, wobei die Anwendung geeignet ist, um mehrere Phasen aufzuweisen, wobei jede Phase mit einem jeweiligen Nutzungsgrad jedes Rechenkerns (8) verbunden ist, auf dem die Anwendung ausgeführt wird,
- die Agenten (14) für jeden Knoten (6) bestimmen, ob eine Phasenänderung in der ausgeführten Anwendung stattgefunden hat, mittels der Messung der Metrik, und gegebenenfalls eine Betriebsänderung des Knotens (6) steuern, wobei die Betriebsänderung aus der Liste ausgewählt ist, bestehend aus:
∘ Modifizieren des Betriebspunkts der Rechenkerne (8) des Knotens (6);
∘ Deaktivieren der Rechenkerne des Knotens (6), wenn dieser ohne Auslastung ist; und
∘ Modifizieren der Aufgabenverteilung an die Rechenkerne (8) des Knotens (6),
- ein automatisierter Koordinator (16) in regelmäßigen Abständen die Metrikmessungen und die Betriebsänderungen der Knoten (6) aggregiert, die stattgefunden haben, und eine Entwicklung des Energieverbrauchs des Server-Clusters (4) und eine Entwicklung des Energieverbrauchs jedes der Knoten (6) bestimmt, und
- in Abhängigkeit von den aggregierten Messungen und der Entwicklung des Energieverbrauchs des Server-Clusters (4) und der Entwicklung des Energieverbrauchs jedes der Knoten (6), der Koordinator (16) Anweisungen an mindestens einen der Agenten (14) zum Optimieren der Entscheidungen sendet, die durch den Agenten auf einem Knoten getroffen werden.

2. Verfahren nach dem vorstehenden Anspruch, wobei jeder Agent (14) vor dem Bestimmen, ob eine Phasenänderung stattgefunden hat, den Wert der gemessenen Metrik mit einem oder mehreren vorbestimmten Schwellenwerten vergleicht.

3. Verfahren nach dem vorstehenden Anspruch, wobei die vorbestimmten Schwellenwerte in Abhängigkeit von der Auswirkung einer Betriebsänderung der Knoten (6), die durch die Agenten (14) gesteuert werden, dynamisch geändert werden.

4. Verfahren nach einem der vorstehenden Ansprüche, wobei die Metrik aus der Liste ausgewählt ist, die aus dem momentanen Energieverbrauch der Knoten, der Anzahl von Anweisungen pro Prozessorzyklus, die durch die Rechenkerne (8) der Knoten ausgeführt werden, der Quantität von Lese- und/oder Schreibvorgängen in Dateisystemen, die durch die Knoten durchgeführt werden, und der Anzahl von Bytes besteht, die über ein Netzwerk durch die Knoten gesendet und/oder empfangen werden.

5. Verfahren nach einem der vorstehenden Ansprüche, wobei das Steuern der Betriebsänderung der Knoten (6) durch die Agenten (14) mindestens ein vorbestimmtes Vorhersagemodell einer Leistung der Knoten oder einer Energie berücksichtigt, die durch die Knoten verbraucht wird.

6. Verfahren nach einem der vorstehenden Ansprüche, wobei der Koordinator (16) alle zehn bis dreißig Sekunden die Metrikmessungen und die Betriebsänderungen der Knoten (6) aggregiert, vorzugsweise alle fünfzehn Sekunden.

7. Verfahren nach einem der vorstehenden Ansprüche, wobei die Daten, die durch die Agenten (14) an den Koordinator (16) gesendet werden, mindestens eine Liste von Phasensequenzen, die durch die Knoten angetroffen werden, Statistiken über die Messwerte der Metrik, Informationen über eine Leistung der Knoten oder Informationen über einen Energieverbrauch der Knoten umfassen.

8. Verfahren nach dem vorstehenden Anspruch, wobei der Koordinator (16) die Agenten (14) der Reihe nach abfragt, beispielsweise nach dem "Round-Robin-Unicast"-Modell.

9. Verfahren nach einem der vorstehenden Ansprüche, wobei der Koordinator (16) in Abhängigkeit von den aggregierten Messungen bestimmt, ob der Gesamtenergieverbrauch des Server-Clusters (4) gestiegen oder gesunken ist, und ob der Energieverbrauch jedes der Server-Cluster der Knoten (6) gestiegen oder gesunken ist.

10. Verfahren nach einem der vorstehenden Ansprüche, das im Rahmen einer Hochleistungsberechnung implementiert wird.

11. Computerprogramm, umfassend Code-Anweisungen, die, wenn das Programm durch einen Computer ausgeführt wird, diesen veranlassen, die Schritte des Verfahrens nach einem der vorstehenden Ansprüche zu implementieren.

12. Verfahren zum Bereitstellen des Programms nach dem vorstehenden Anspruch im Hinblick auf sein Herunterladen auf einem Telekommunikationsnetz.

13. Vorrichtung (12) zum Steuern eines Server-Clusters (4), umfassend mehrere Knoten (6), jeder Knoten (6) umfassend mehrere Rechenkerne (8),
**dadurch gekennzeichnet, dass** sie geeignet ist zum:
- Messen der Entwicklung mindestens einer Metrik, die die Nutzung von Knoten (6) des Server-Clusters (4) für die Ausführung einer Anwendung quantifiziert, wobei die Anwendung geeignet ist, um mehrere Phasen aufzuweisen, wobei jede Phase mit einem Nutzungsgrad jedes Rechenkerns (8) verbunden ist, auf dem die Anwendung ausgeführt wird,
- Bestimmen, für jeden Knoten (6) mittels der Messung der Metrik, ob eine Phasenänderung in der ausgeführten Anwendung stattgefunden hat, und gegebenenfalls Steuern einer Betriebsänderung des Knotens (6), wobei die Betriebsänderung aus der Liste ausgewählt ist, bestehend aus:
∘ Modifizieren des Betriebspunkts der Rechenkerne (8) des Knotens (6);
∘ Deaktivieren der Rechenkerne des Knotens (6), wenn dieser ohne Auslastung ist; und
∘ Modifizieren der Aufgabenverteilung an die Rechenkerne (8) des Knotens (6),
- Aggregieren, in regelmäßigen Abständen, der Metrikmessungen und der Betriebsänderungen der Knoten (6) und Bestimmen einer Entwicklung des Energieverbrauchs des Server-Clusters (4) und einer Entwicklung des Energieverbrauchs jedes der Knoten (6), und
- in Abhängigkeit von den aggregierten Messungen und der Entwicklung des Energieverbrauchs des Server-Clusters (4) und der Entwicklung des Energieverbrauchs jedes der Knoten (6), Senden von Betriebsänderungsanweisungen an die Knoten (6) zum Optimieren der Entscheidungen, die durch den Agenten auf einem Knoten (6) getroffen werden.

14. System, umfassend eine Steuervorrichtung (12) nach dem vorstehenden Anspruch und einen Server-Cluster (4).

## Claims

1. Method for controlling a server cluster (4), the cluster (4) comprising a plurality of nodes (6), each node (6) comprising a plurality of computing cores (8), **characterized in that:**
- automated agents (14) measure the variation of at least one metric quantifying the utilization of the nodes (6) for the execution of an application, said application being capable of having a plurality of phases, each phase being linked to a utilization level of each computing core (8) on which the application is executed,
- the agents (14) determine, for each node (6), whether a phase change has taken place in the executed application by means of the metric measurement and, if so, control an operating change of the node (6), the operating change being chosen from the list consisting of:
∘ modifying the operating point of the computing cores (8) of said node (6);
∘ deactivating the computing cores of said node (6) when it has no workload; and
∘ modifying the allocation of tasks to the computing cores (8) of said node (6),
- an automated coordinator (16) aggregates, at regular intervals, the metric measurements and operating changes of the nodes (6) that have taken place and determines a variation of the energy consumption of the server cluster (4) and a variation of the energy consumption of each of the nodes (6), and
- the coordinator (16) sends instructions to at least one of the agents (14) to refine the decisions taken by said agent on a node, according to the aggregated measurements and the variation of the energy consumption of the server cluster (4) and the variation of the energy consumption of each of the nodes (6).

2. Method according to the preceding claim, wherein, before determining whether a phase change has taken place, each agent (14) compares the value of the measured metric with one or more predetermined threshold values.

3. Method according to the preceding claim, wherein the predetermined threshold values are dynamically modified according to the impact of an operating change of the nodes (6) controlled by the agents (14).

4. Method according to any of the preceding claims, wherein the metric is chosen from the list consisting of the instantaneous energy consumption of the nodes, the number of instructions per processor cycle executed by computing cores (8) of the nodes, the amount of file system reads and/or writes performed by the nodes, and the number of bytes sent and/or received over a network by the nodes.

5. Method according to any of the preceding claims, wherein the control of the operating change of the nodes (6) by the agents (14) takes into account at least one predetermined prediction model of a performance of the nodes or of an energy consumed by the nodes.

6. Method according to any of the preceding claims, wherein the coordinator (16) aggregates the metric measurements and operating changes of the nodes (6) every ten to thirty seconds, preferably every fifteen seconds.

7. Method according to any of the preceding claims, wherein the data sent by the agents (14) to the coordinator (16) comprise at least a list of phase sequences encountered by the nodes, statistics on the measurements of values of the metric, information on performance of the nodes, or information on energy consumption of the nodes.

8. Method according to the preceding claim, wherein the coordinator (16) interrogates the agents (14) in turn, for example according to the "round-robin unicast" model.

9. Method according to any of the preceding claims, wherein the coordinator (16) determines, according to the aggregated measurements, whether the overall energy consumption of the server cluster (4) has increased or decreased, and whether the energy consumption of each of the nodes (6) has increased or decreased.

10. Method according to any of the preceding claims, implemented in the context of high-performance computing.

11. Computer program comprising code instructions which, when the program is executed by a computer, cause the latter to implement the method steps according to any of the preceding claims.

12. Method for making the program of the preceding claim available for download on a telecommunications network.

13. Control device (12) for a server cluster (4) comprising a plurality of nodes (6), each node (6) comprising a plurality of computing cores (8), **characterized in that** it is capable of:
- measuring the variation of at least one metric quantifying the utilization of nodes (6) of the server cluster (4) for the execution of an application, said application being capable of having a plurality of phases, each phase being linked to a utilization level of each computing core (8) on which the application is executed,
- determining, for each node (6), by means of the metric measurement, whether a phase change has taken place in the executed application and, if so, controlling an operating change of the node (6), the operating change being chosen from the list consisting of:
∘ modifying the operating point of the computing cores (8) of said node (6);
∘ deactivating the computing cores of said node (6) when it has no workload; and
∘ modifying the allocation of tasks to the computing cores (8) of said node (6),
- aggregating, at regular intervals, the metric measurements and operating changes of the nodes (6) and determining a variation of the energy consumption of the server cluster (4) and a variation of the energy consumption of each of the nodes (6), and
- sending operating change instructions to the nodes (6) to refine the decisions taken by said agent on a node (6), according to the aggregated measurements and the variation of the energy consumption of the server cluster (4) and the variation of the energy consumption of each of the nodes (6).

14. System comprising a control device (12) according to the preceding claim and a server cluster (4).
